**Europäisches Patentamt**

**(19) European Patent Office**

**Office européen des brevets**

(11) Publication number : **0 041 406 B2**

# (12) NEW EUROPEAN PATENT SPECIFICATION

(45) Date of publication of the new patent specification : **16.09.92 Bulletin 92/38**

(51) Int. Cl.⁵ : **G06F 12/06,** G06F 13/22, G06F 11/00

(21) Application number : **81302478.3**

(22) Date of filing : **04.06.81**

(54) **Component identification in computer system.**

(30) Priority : **04.06.80 US 156374**

(43) Date of publication of application : **09.12.81 Bulletin 81/49**

(45) Publication of the grant of the patent : **13.05.87 Bulletin 87/20**

(45) Mention of the opposition decision : **16.09.92 Bulletin 92/38**

(84) Designated Contracting States : **DE FR GB**

(56) References cited :
**DE-A- 2 328 058**
**US-A- 3 735 106**
**US-A- 3 879 712**
**US-A- 3 898 631**

(56) References cited :
**IBM TECHNICAL DISCLOSURE BULLETIN, vol. 22, no. 10, March 1980 New York, US MEGURO: "Automatic Module Detection" pages4615-4616**

(73) Proprietor : **HONEYWELL INC.**
**Honeywell Plaza**
**Minneapolis Minnesota 55408 (US)**

(72) Inventor : **Cherry, Robert G.**
**1502 W. Orchid Lane**
**Phoenix Arizona 85021 (US)**
Inventor : **Phinney, Thomas L.**
**311 W. Montecito Avenue**
**Phoenix Arizona 85013 (US)**

(74) Representative : **Fox-Male, Nicholas Vincent Humbert**
**Honeywell Control Systems Limited Charles Square**
**Bracknell Berkshire RG12 1EB (GB)**

EP 0 041 406 B2

Jouve, 18, rue Saint-Denis, 75001 PARIS

## Description

The present invention relates to computer systems, and more particularly to a technique for assuring a correlation of ordered changes and the accomplishment of those changes in computer components.

A computer system is made up of a plurality of component units, many of which are in the form of separate printed circuit boards. From time to time, after the system is in the field, changes or improvements are originated at the design level. Instructions for effecting such changes are sent to field service personnel who then follow the instructions and make the necessary changes in the apparatus. It also often happens that after a system has been in the field in service for some time, a problem develops requiring correction. When the problem has been analyzed at the design level, certain revisions are made to the circuitry which overcome the particular problem. In recognition that the particular problem would be common to all of the systems in the field of that particular type, field change orders are sent to the field service personnel at each location having such a computer. Following such instructions, it is assumed that the field service personnel will have effected the necessary changes. Very often, the complement of the change in the circuit structure of the computer system is a corresponding change in the applied software. The software changes are then sent to the users for implementation into their system. The part of the instruction for the field service personnel is that the particular circuit board on which changes have been made is to be annotated in handwriting indicating that the changes have been completed. It happens on occasions that the field service personnel, in the press of an abundance of work, will make the hand written annotations on the board without actually making the changes. Then, later, when a problem develops in the system, much time and effort is in appropriate slots. Board 4 may be, for example, a buffer board to provide a buffering interface between this computer system and other systems in a multi-computer combination or a buffer from one chassis to another. Board 6 may be the computer, or central processor, board. Board 8 may comprise memory boards. The chassis 2 also includes interface boards 10 for interfacing with peripheral equipment and process I/O controller board 12, and a power supply unit on one or more boards 14. The several boards are interconnected by a bus made up of one or more ribbon type cables 16 connected to the boards by suitable edge connectors 18, or by a printed circuit back plane.

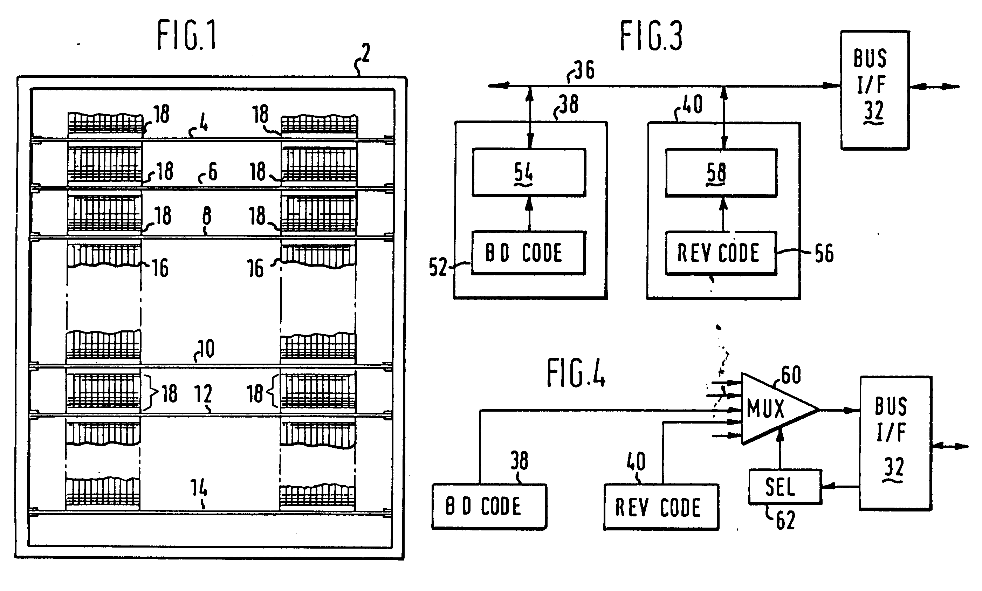

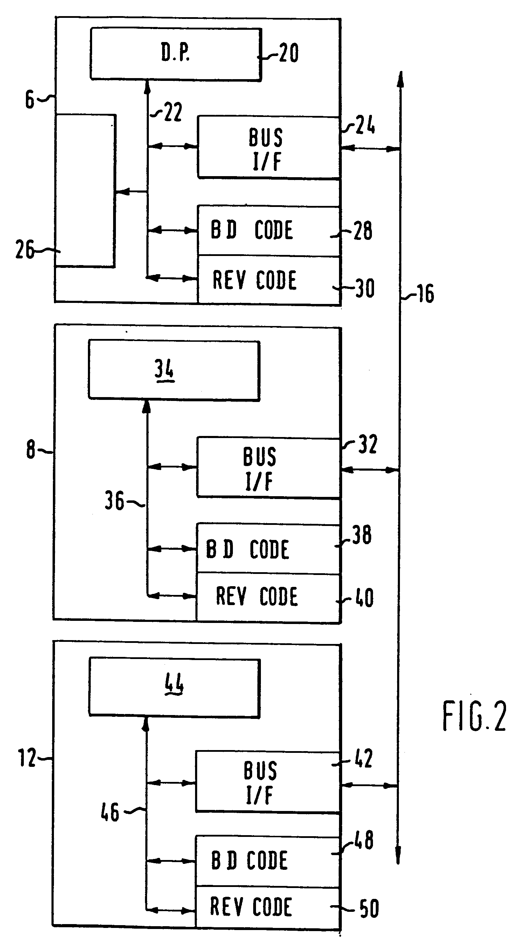

Figure 2 shows, in greater detail, a portion of the structure shown in Figure 1. Board 6, the central processor unit, includes a data processor 20 connected by an on-board bus 22 to a bus interface unit 24. The bus interface unit 24 provides an interface between the data processor and the computer bus 16. The on-board bus 22 also is connected to other board components 26. The board 6 also includes two coded identification sections each also connected to the data processor 20 by way of the on-board bus 22. These two sections are a board type code section 28, and a revision status section 30. The board type section 28 includes a unique code to identify the type of board on which this section appears. That section may be addressed by the data processor 20 to ascertain the board type. This code is a fixed code pattern which may be a permanent part of the artwork on the board itself. The revision status code section 30 is a variable code to identify the revision status of the components on the board itself. This code is changeable by a field service engineer at the same time that technical changes are made in the component structure of the board itself, in order to annotate those changes.

The memory board 8 also includes a bus interface unit 32 to interface the computer bus 16 and the other board components 34 on the board 8 by way of the on-board bus 36. Also on the board 8 is a board type code section 38 and a revision status code section 40 both of which are in communication with the on-board bus 36. Here, too, the board type section features a unique fixed code wasted in trying to resolve the problem, sometime occasioned by the fact that the program material now supplied to the system does not match the hardware because the change had not been made. On other occasions, time and effort are wasted in looking for a solution to a presumed different problem, based on the assumption that the change had been made to the particular system when in fact the change had not been made.

Accordingly, the present invention provides a computer system having a computer and a plurality of components making up said system, annotation means for annotating technical changes in any of said components, characterised in that the annotation means comprise: a coding section included in each component for establishing a code word, identifying the revision status of the component, which is manually changeable in accordance with instructions for manually revising the physical layout or state of the component and of the coding section thereby concurrently manually changing the code words to correspond to revisions to said component, said code word being changeable with a difficulty of the same order of magnitude as the corresponding revision to said component; and
addressing means addressable by the computer to enable the computer to interrogate the component for its revision status.

Two embodiments of the present invention will now be described with reference to the accompanying drawings, in which:
Figure 1 shows a computer system;

Figure 2 is a block diagram of a portion of the system shown in Figure 1 in greater detail;
Figure 3 is a block diagram showing circuit elements of one form of the present invention; and
Figure 4 is a block diagram of circuit elements of a different form of the present invention.

Figure 1 shows a computer system including a chassis 2, which may be one of several such chassis, in which a number of printed circuit boards 4, 6, 8,... are inserted which will identify the board type. Again, the revision status code is a variable code which may be changed by the field service engineer at the same time that technical changes are being made to the other components on the board. Since the board type section 38 and the revision status section 40 are connected to the on-board bus 36 and thereby through the bus interface 32 to the bus 16, the board 8 may be addressed by the computer on the board 60 to enable the board type section 38 and the revision status section 40. This enables the computer board 6 to interrogate the board 8 to identify itself electronically as to board type and to identify electronically its current revision status. The I/O controller board 12 also includes a bus interface unit 42 which interfaces the computer bus 16 with the operative board component 44 by way of the on-board bus 46. Here again, the board includes a board type section 48 and a board revision status section 50. The board type section 48 and the revision status section 50. The board type section 48 and the revision status section 50 are, again, connected to the on-board bus 46 and hence through the bus interface unit 42 to the computer bus 16. Thus, the data processor on the board 6 may address the board 12 and request identification of the board and its present revision status.

Similarly, all of the other boards in the computer system will have a section reserved for the board type identification code and the revision status code. Each of these sections will be addressable by the data processor whereby each board may then identify itself and also its current revision status, thus being accomplished electronically.

Figure 3 is a more detailed diagram of certain parts of the printed circuit board 8 of Figure 2. The board type code unit 38 includes a first component 52 which comprises the code unit, per se, and a second component 54 which comprises a plurality of addressable gates. The outputs of the addressable gates 54 are connected to the on-board bus 36 for connection to the bus interface unit 32. Similarly the revision status code section 40 includes a first component which comprises the variable status code unit 56 and a second component 58 which, again, comprises a plurality of addressable gates. The addressable gates are also connected by the on-board bus 36 to the bus interface unit 32 for communication with the central processor. The addressable gate units 54 to 58 are addressable from the central processor to enable the transmission of the coded signals to the central processor.

A somewhat different embodiment is shown in Figure 4. Whereas in Figure 3 the output of the board type code and the revision status code are transmitted to the bus interface unit 32 via an on-board bus 36, and thence to the central processor in parallel data form, in Figure 4 there are means provided for transmitting that data to the bus interface unit 32 via an on-board multiplexor 60, and thence to the central processor in serial data form. In Figure 4 the board type code unit is connected directly to a multiplexor 60. Similarly, the revision status code unit 40 is connected directly to the multiplexor 60. The multiplexor 60 is connected to the bus interface unit 32 for communication with the central processor. In the structure shown in Figure 4, the board type code unit and the revision status code unit are addressed from the central processor by enabling and select signals applied from the bus interface unit through a select unit 62 to enable the multiplexor 60 and select among its inputs. The select unit 62 may be in a form of a conventional decoder.

In the Figure 3 arrangement, the board type code unit 52 may conveniently be an 8-bit unit, in which 8 output lines are individually connected to either earth or a positive voltage supply to generate an 8-bit board type code. The connections will be part of the permanently wired artwork of the board. The 8 output lines will be connected to a set of 8 gates 54 having a common addressing (enabling) line. When the particular board has been addressed and the gates 54 enabled by the central processor, the code signals representing the board identification are transmitted by way of the bus interface unit 32 and the bus 16 to the data processor 20. There the signals are recognized as properly or improperly identifying the selected board.

The revision status code unit 56 may also conveniently be an 8-bit unit, the structure of which is slightly more complicated than that of the unit 52. For unit 56, each of the 8 lines is connected to a positive voltage supply through a respective pull-up resistor, and to a respective one of a set of 8 terminals to which jumpers to earth can be soldered. Thus by soldering jumpers into place, a desired revision status code can be encoded into the unit 56. When a technical change is made on the board, the change instructions include an instruction to add a jumper or to remove a jumper from one of the jumper terminals. While it is desired to keep the annotation code changes as simple as possible, it is also desired to arrange the sequence of the code in such a manner as to render it not readily decipherable by a field service engineer. To this end, it is preferred that the order of progression of the change order numbers be in accordance with a modified gray scale code. The purpose of this arrangement is in an effort to avoid the probability that the field service engineer will merely make the annotation change without actually making the technical change on the board. It is recognized that the electrical annotation could be accomplished with mini-switches or the like. This, however, would make the annotation much easier to implement than the technical change itself and would tend to defeat the purpose of maintaining the technical changes current with the annotation. The solder connected jumpers are of the same order of magnitude of difficulty to change as is the technical change on the board itself. Accordingly, while the field service engineer has his soldering iron out and operating he will then make both changes at the same time.

Unit 58 is substantially identical to unit 54. Again these gates are enabled by a signal derived from the central processor and applied to the gates on a common lead connected to the bus interface 32. Thus when the board has been addressed and the enable signal transmitted from the central processor to enable the gates 58, the revision status code for that particular board will be transmitted through the gates 58 and the bus interface 32 to the central processor. There, the proper revision status will be acknowledged or the error recognized, since a revision status code will have been included within the software applicable to the operation of that particular computer.

## Claims

1. A computer system having a computer and a plurality of components making up said system and annotation means for annotating technical changes in any of said components, characterised in that the annotation means comprise:
a coding section (30,40,50) included in each component for establishing a code word, identifying the revision status of the component, which is manually changeable in accordance with instructions for manually revising the physical layout or state of the component and of the coding section thereby concurrently manually changing the code word to correspond to revisions to said component, said code word being changeable with a difficulty of the same order of magnitude as the corresponding revision to said component; and addressing means (54;60,62) addressable by the computer to enable the computer to interrogate the component for its revision status.

2. A computer system according to Claim 1, characterised in that the components each comprise a printed circuit board (10,12,14...) and the coding section includes a plurality of terminals each biased to a first logical state and clamping means for clamping selected ones of the terminals to a second logical state in accordance with a pre-

determined coded sequence.

3. A computer system according to Claim 2, characterised in that the clamping means comprise jumpers which connect the selected terminals to earth.

4. A computer system according to Claim 3, wherein the jumpers are solder connected.

5. A computer system according to either of Claims 3 or 4, characterised in that addressing means includes a plurality of gates (54), corresponding in number to the plurality of terminals, and means (32) responsive to a signal from the computer to enable the gates whereby the code word is transmitted to the computer in parallel data format.

6. A computer system according to either of Claim 3 or 4, characterized in that the addressing means includes a multiplexer (60) and means (32, 62) responsive to signals from the computer for sequencing said multiplexer to transmit the code word to the computer in serial data format.

7. A computer system according to any previous claim, characterized in that the annotation means includes a further coding section (30, 56, 40) included in each component for establishing a fixed code word, identifying the nature of the component, and addressing means addressable by the computer to enable the computer to interrogate the component for its nature.

## Patentansprüche

1. Rechnersystem mit einem Rechner und mehreren zusammen mit dem Rechner das System bildenden Baugruppen sowie Kennzeichnungseinrichtungen zum Kennzeichnen technischer Änderungen in einer Baugruppe, **dadurch gekennzeichnet**, daß die Kennzeichnungseinrichtung umfaßt:
einen Codierbereich (30, 40, 50) in jeder Baugruppe zum Eingeben eines den Revisionszustand der Baugruppe identifizierenden Codewortes, welches in Übereinstimmung mit Anweisungen zur manuellen Revision der physikalischen Ausgestaltung oder des Zustands der Baugruppe und des Codierbereichs von Hand veränderbar ist und dadurch zugleich in Anpassung an die Revision der Baugruppe von Hand das Codewort ändert, wobei das Codewort mit einem gleichen Schwierigkeitsgrad änderbar ist, wie die Revision der Baugruppe; und eine vom Rechner adressierbare Adressiereinrichtung (54; 60, 62), um dem Rechner die Abfrage der Baugruppe hinsichtlich ihres Revisionszustands zu ermöglichen.

2. Rechnersystem nach Anspruch 1, **dadurch gekennzeichnet**, daß jede Baugruppe eine Leiterplatte (10,12,14...) enthält und der Codierbereich mehrere, jeweils auf einen ersten logischen Zustand eingestellte Anschlüsse sowie Klemmeinrichtungen umfaßt, um ausgewählte Anschlüsse entsprechend einer vorgegebenen Codefolge auf einen zweiten logischen Zustand festzulegen.

3. Rechnersystem nach Anspruch 2, **dadurch gekennzeichnet**, daß die Klemmeinrichtung Schaltbrücken umfaßt, welche die ausgewählten Anschlüsse mit Masse verbinden.

4. Rechnersystem nach Anspruch 3, **dadurch gekennzeichnet**, daß die Schaltbrücken angelötet sind.

5. Rechnersystem nach Anspruch 3 oder 4, **dadurch gekennzeichnet**, daß die Adressiereinrichtung mehrere, hinsichtlich ihrer Anzahl der Zahl der Anschlüsse entsprechende Gatter (54) sowie eine auf ein Signal vom Rechner ansprechende und die Gatter aktivierende Schaltung (32) umfaßt, wodurch das Codewort im Paralleldatenformat zum Rechner übertragen wird.

6. Rechnersystem nach Anspruch 3 oder 4, **dadurch gekennzeichnet,** daß die Adressiereinrichtung einen Multiplexer (60) sowie eine auf Signale vom Rechner ansprechende Schaltung (32,62) umfaßt, um den Multiplexer fortzuschalten und das Codewort im Seriendatenformat zum Rechner zu übertragen.

7. Rechnersystem nach einem der vorangehenden Ansprüche, **dadurch gekennzeichnet,** daß die Kennzeichnungseinrichtung einen weiteren Codebereich (30, 56,40) in jeder der Baugruppen umfaßt, der ein die Art der Baugruppe identifizierendes Codewort beinhaltet, sowie eine vom Rechner adressierbare Adressiereinrichtung enthält, um dem Rechner die Abfrage der Baugruppe hinsichtlich ihrer Art zu ermöglichen.

**Revendications**

1. Système informatique comportant un ordinateur et un ensemble de composants constituant ledit système, et des moyens d'annotation servant à noter des changements techniques dans l'un quelconque desdits composants, caractérisé en ce que les moyens d'annotation comprennent : une section de codage (30,40,50) incluse dans chaque composant pour établir un mot de code identifiant l'état de révision du composant, qui peut être modifié manuellement en fonction d'instructions permettant de réviser manuellement l'agencement physique ou l'état du composant de la section de codage, ce qui permet de modifier manuellement le mot de code pour qu'il corresponde à des révisions apportées audit composant , ledit mot de code pouvant être changé avec une difficulté du même ordre de grandeur que la révision correspondante dudit composant; et des moyens d'adressage (54;60,62) pouvant être adressés par l'ordinateur afin de permettre à l'ordinateur d'interroger le composant sur son état de révision.

2. Système informatique selon la revendication 1, caractérisé en ce que les composants comprennent chacun une plaquette à circuit imprimé (10,12,14...) et que la section de codage comprend une pluralité de bornes, sollicitées chacune dans un premier état logique, et des moyens de verrouillage permettant de verrouiller certaines sélectionnées des bornes dans un second état logique conformément à une séquence codée prédéterminée.

3. Système informatique selon la revendication 2, caractérisé en ce que les moyens de verrouillage comprennent des cavaliers qui raccordent les bornes sélectionnées à la masse.

4. Système informatique selon la revendication 3, dans lequel les cavaliers sont connectés par des soudures.

5. Système informatique selon l'une quelconque des revendications 3 ou 4, caractérisé en ce que les moyens d'adressage comprennent une pluralité de portes (54) qui correspondent, en nombre, à la pluralité de bornes, et des moyens (32) sensibles à un signal délivré par l'ordinateur pour valider les portes, ce qui permet la transmission du mot de code à l'ordinateur, selon un format de données en parallèle.

6. Système informatique selon l'une quelconque des revendications 3 ou 4, caractérisé en ce que les moyens d'adressage comprennent un multiplexeur (60) et des moyens (32,62) sensibles à des signaux délivrés par l'ordinateur pour la commande séquentielle dudit multiplexeur en vue de la transmission du mot de code à l'ordinateur selon un format de données en série.

7. Système informatique selon l'une quelconque des revendications précédentes, caractérisé en ce que les moyens d'annotation comprennent une autre section de codage (30,56,40) contenue dans chaque composant pour établir un mot de code fixe, identifier la nature du composant et adresser des moyens adressables par l'ordinateur pour permettre à ce dernier d'interroger le composant sur sa nature.

## FIG.1

## FIG.3

## FIG.4

EP 0 041 406 B2

FIG.2